# EUROPEAN PATENT SPECIFICATION

(11) **EP 2 417 349 B1**
(45) Date of publication and mention of the grant of the patent: **01.06.2016**
(21) Application number: 10718641.3
(22) Date of filing: 08.04.2010
(51) Int. Cl.: F03B 17/06

(54) **GENERATION APPARATUS**
ERZEUGUNGSVORRICHTUNG
APPAREIL DE GÉNÉRATION

(30) Priority: 08.04.2009 GB 0906111
(43) Date of publication of application: 15.02.2012
(73) Proprietor: Current 2 Current Limited, Kemnay, Aberdeenshire AB51 5NJ (GB)
(72) Inventor: BARNARD, Brian, Aberdeenshire AB51 5NJ (GB); HOYLE, Michael, High Wycombe Buckinghamshire HP14 3NP (GB); GLEDHILL, Andrew, Aberdeenshire AB39 2UA (GB); KIRTON, David, Aberdeenshire AB31 5PB (GB)
(74) Representative: Moreland, David
(86) International application number: PCT/GB2010/000724
(87) International publication number: WO 2010/116149

(56) References cited:
- DE-A1-102005 033 412
- US-A- 4 416 584
- US-A1- 2008 238 105
- US-A1- 2008 247 860

## Description

### Field of the Invention

The present invention relates to a generation apparatus for generating power. Particularly, but not exclusively, the present invention relates to a generation apparatus for generating power from subsea currents.

### Background to the Invention

With declining reserves of fossil fuels, there is a desire to develop new ways of harnessing energy from renewable sources such as wind power or tidal power.

Many devices for generating power from wind or sea/river currents have been proposed, however, the majority of such devices are either uni-directional or bidirectional in that they can only operate if the fluid flow is from one direction or the opposite direction. There are omni-directional devices which, for example, rotate into the wind, however these devices require complex bearing arrangements to do so.

A further problem arises with some designs of subsea generation devices which have exposed moving parts, these moving parts can pose a hazard to fishing vessels as the fishing nets can get caught up in device and, in some cases, the fishing nets may be dragged to the sea bed.

A further drawback with conventional generation devices is the window within which they operate can be quite small. That is, if the wind or current is too low or too high, the device cannot operate.

DE102005033412A and US2008/0247860A discloses each a generation apparatus for generating power from subsea currents according to the prior art.

### Summary of the Invention

According to a first aspect of the present invention there is provided a generation apparatus for generating power from subsea currents according to claim 1.

In one embodiment, an apparatus according to the present invention can harness flow from all directions as the plane of the direction of flow of the incoming fluid is substantially perpendicular to at least one of the turbine or turbines axes, and utilise the flow to generate power. An apparatus which generates power from all directions has great utility and is simpler to install as orientation is less of an issue.

Although the generation apparatus is described as being suitable for generating power from subsea currents, at least one embodiment of the present invention may be suitable for generating power from wind. Similarly, for the avoidance of doubt, the currents which can be used to generate power are not restricted to tidal currents but could also include currents created by a change in height, for example, in a river, or currents generated from climatic conditions such as wind generated currents. Furthermore, any flow of liquid which may not technically be described as a current such as a tidal bore could be harnessed in embodiments of the present invention.

The flow of fluid, in use, approaches the apparatus in a direction substantially perpendicular to the/each turbine axis.

There may be a plurality of guide vanes.

The/each guide vane is adapted to direct an incoming fluid flow towards the turbine.

The/each guide vane may be mounted to an at least one housing surface.

The/each housing surface and the/each guide vane define a flow path.

At least a portion of the/each flow path may be a channel

At least a portion of the/each flow path may be an enclosed conduit.

At least a portion of the/each flow path is adapted to change the direction of an incoming flow of fluid. The change in direction can be two or three dimensional.

At least a portion of the/each flow path may be adapted to change the direction of a horizontal flow of fluid into a substantially vertical flow of fluid.

At least a portion of the/each flow path may be adapted to accelerate an incoming flow of fluid. Accelerating the flow increases the utility of the device by enabling the apparatus to generate power from relatively slow incoming flows.

The acceleration of an incoming fluid may be achieved by a reduction in cross-sectional area of the flow path.

At least a portion of the/each flow path may be adapted to impart a rotation to an incoming flow of fluid.

The rotating fluid may rotate around an axis.

The rotation axis may be substantially parallel to at least one turbine axis.

The rotating fluid may rotate around the housing. Such an arrangement facilitates delivery of moving fluid to the turbine over more than 50% of the area swept by the turbine blades.

At least a portion of at least one of the flow paths may be linear.

At least a portion of at least one of the flow paths may be helical.

In one embodiment the/each flow path comprises a linear portion and a helical portion.

The helical portion may be adjacent the turbine inlet.

Where the helical portion is adjacent to the turbine inlet, the guide vanes defining the helical portion may act as stators.

The housing surface may be arranged, in use, at an obtuse angle to an incoming flow of fluid.

In use, upon engagement with the housing surface, the flow of fluid may change direction.

The housing may comprise inner and outer housings.

The inner and outer housings may be at least partially spaced apart.

The inner and outer housings may be at least partially spaced apart by the/each guide vane.

Where there are a plurality of guide vanes, the inner housing, the outer housing, and each pair of adjacent guide vane may define at least one flow path.

The inner and outer housings may define an apparatus inlet.

The inner and outer housings may define a turbine inlet.

The inner housing and the outer housing may define an apparatus outlet.

The/each turbine may be arranged between the apparatus inlet and the apparatus outlet. In one embodiment having the turbine inlet between the apparatus inlet and the apparatus outlet allows the turbine to be concealed by the housing and reduces the possibility of, for example, fishing nets getting caught in the turbine.

The/each flow path may be adapted to deliver a flow of fluid to the turbine inlet.

The cross sectional area of each flow path may decrease over the length of the flow path. A decreasing flow path area results in acceleration of the flow, delivering a faster flow of fluid to the turbine inlet.

In one embodiment, the inner and outer housings comprise conical or frusto-conical regions. It will be understood that the term "conical" is not restricted to a shape having a circular cross section but is intended to include a shape comprising multiple linear sections with a cross-section which may be hexagonal, octagonal or any suitable shape.

In this embodiment, the inner and outer housings are in a stacked relationship.

In this embodiment, the conical or frusto-conical regions may be substantially parallel.

Alternatively, the conical or frusto-conical regions may be convergent to accelerate a fluid flow towards the turbine.

In an alternative embodiment, the outer housing may be toroidal, the outer housing defining a throughbore. By toroidal it is meant an enclosed shape defining a throughbore, like a ring-doughnut.

The outer housing throughbore may define a conical internal surface converging towards an apparatus outlet.

In this embodiment the cross-section of the toroid may be triangular.

The inner housing may define a tapered surface extending into the outer housing throughbore.

In this embodiment the inner housing may comprise a conical region.

The inner housing may be arranged as an inverted cone, a portion of the cone extending into the outer housing throughbore.

The apparatus may comprise a base.

The base may be adapted to raise the housing off a surface, such as a seabed.

The base may define a flow path underneath the housing.

The apparatus outlet may be adjacent the base flow path.

In at least one embodiment, a venturi effect may be established at the apparatus outlet due to the flow of fluid along the base flow path. When such an effect is established, the flow of fluid along the base flow path passed the apparatus outlet sucks fluid from inside the apparatus out of the outlet which, it is believed, will suck more fluid through the turbine.

In an alternative arrangement, the apparatus outlet may be distal the base.

The base may comprise a plurality of legs.

In a preferred embodiment the base comprises at least three legs.

The apparatus may be adapted to releasably attach to the legs. Releasably attaching the housing to the base permits the housing to be removed from the base in the event of a failure of some kind and replaced with an alternative unit. Replacing a defective unit with an operational unit maximises the energy extraction at the particular location.

The legs may be connected by a base frame.

The legs may be height adjustable to permit levelling.

The base may comprise an inflatable mould. A mould is provided to allow concrete or the like to be poured around the base frame to secure the base relative to the sea bed.

The mould may comprise a foundation.

The foundation may be at least partially inflatable between a collapsed configuration and an inflated configuration.

The mould foundation may be inflated by filling with concrete or the like.

In one embodiment inflating the mould foundation with concrete, encapsulates the base frame in concrete.

The mould may comprise at least one wall.

The/each mould walls may be at least partially inflatable between a collapsed configuration and an inflated configuration.

The/each inflatable walls may be inflated using seawater.

Once inflated the mould walls may extend upwardly from the foundation.

Once inflated the foundation and the walls define a vessel for receiving ballast. In some environments, such as in a region of high current speeds, it may be desirable to add ballast on top of the foundation to add extra weight to the apparatus.

The mould may be biodegradable.

The mould foundation may define at least one slit. Slits allow water to flow through the foundation as is lowered into position on the sea bed prior to inflation.

The apparatus may comprise a cowl.

The cowl may be located adjacent the apparatus outlet. A cowl may be provided to promote development of a low pressure area in the vicinity of the exhaust to promote acceleration of the exhaust flow.

The housing surface may be smooth.

Alternatively the housing surface may define a surface profile.

The surface profile may comprise dimples and/or protrusions. It is believed a surface profile of, for example dimples and/or protrusions, improves the flow of fluid across the surface.

The housing may comprise a housing frame.

The/each housing surface may be attached to the housing frame.

The/each housing surface may be a flexible material.

Alternatively the/each housing surface may be a stiff material.

The/each housing surface may comprise a lightweight material.

The/each housing surface may comprise a fabric such as ripstop nylon, polyester, glass reinforced elastomer, polypropylene, Kevlar or any other suitable material.

The/each guide vane may be a flexible material.

Alternatively the/each guide vane may be a stiff material such as steel.

The/each guide vane may comprise a lightweight material.

The/each guide vane may comprise a fabric such as ripstop nylon, polyester, glass reinforced elastomer, polypropylene, Kevlar or any other suitable material.

The/each guide vane may comprise a leading edge. The leading edge is the first part of the exposed portion of the/each guide vane to meet the incoming flow of fluid, when the flow of fluid is parallel to the plane of the guide vane. The leading edge of the guide vane may also be described as the edge of the guide vane exposed to the flow of fluid which is furthest from the turbine axis in a plane transverse to the turbine axis.

The/each leading edge may comprise at least one flexible portion.

The/each flexible portion may be adapted to move in response to the flow of fluid. The purpose of the flexible portion is to increase the surface area of the vane in circumstances where the flow of fluid is perpendicular to the vane to "gather in" more of the fluid flow. When the flow of fluid is perpendicular to the plane of the vane, the flexible portion may be adapted to bow radially outwards from the leading edge of the vane to direct fluid flow into the apparatus. When the flow of fluid is parallel to the direction of the guide vane, the flexible portion may be adapted to move to a position in which it is aligned with the direction of flow.

Each leading edge may comprise a first flexible portion and a second flexible portion, each flexible portion adapted to gather flow from opposite directions, both of the opposite directions being perpendicular to the plane of the vane.

The/each generator may comprise a soft start. A soft start allows the generator output to be built up over a time duration. A soft start relieves any undue strain on the switchgear and the generator itself.

In one embodiment the generation apparatus comprises a gearbox between the/each turbine and the/each generator.

The/each turbine may comprise a plurality of blades.

The blades may be moveably mounted to a turbine shaft.

The blades may be rotationally mounted to the turbine shaft. In one embodiment, rotationally mounting the turbine blades to the turbine shaft allows the angle of the blades to be adjusted such that a constant rotation speed of the turbine shaft can be maintained when the speed of the incoming flow is variable.

The blades may be self adjusting to rotate to an optimum position for a given speed of flow.

In one embodiment as the speed of the incoming flow increases, the blades are adapted to deflect and/or rotate away from the direction of the incoming flow.

In this embodiment the deflection and/or rotation away from the direction of flow is against the bias of a spring.

The apparatus may comprise one or more ducts adapted to divert flow which has not been gathered by the apparatus inlet to enter the apparatus flow paths.

The ducts may comprise apertures defined by the outer housing.

The ducts may divert flow into the apparatus flow paths adjacent to the turbine inlet.

The ducts may comprise a conical cowl which sits around the outer housing.

According to a second aspect of the present invention there is provided a method of generating power according to claim 14.

### Brief Description of the Drawings

Embodiments of the present invention will now be described with reference to the accompanying figures in which:
Figure 1 is a side view of a generation apparatus according to a first embodiment of the present invention;
Figure 2 is a section view through the apparatus of Figure 1;
Figure 3 is a side view of a generation apparatus according to a second embodiment of the present invention;
Figure 4 is a section view through the apparatus of Figure 3;
Figure 5 is a perspective schematic of the apparatus of Figure 1;
Figure 6 is a perspective schematic of the apparatus of Figure 3;
Figure 7 is a schematic of a turbine inlet according to a third embodiment of the present invention;
Figure 8 is a perspective view of the base frame of the generation apparatus of Figure 1 or Figure 3 during assembly;
Figure 9 is a perspective view of the base mould of the generation apparatus of Figure 1 or Figure 3 during assembly;
Figure 10 is a top view of the base frame of Figure 8 and the base mould of Figure 9 during assembly;
Figure 11 is a schematic of an application of the apparatus of Figure 1 or Figure 3 according to a fourth embodiment of the present invention;
Figure 12 is a schematic of an application of the apparatus of Figure 1 or Figure 3 according to a fifth embodiment of the present invention;
Figure 13 is a schematic of an application of the apparatus of Figure 1 or Figure 3 according to a sixth embodiment of the present invention;
Figure 14 is a schematic of an application of the apparatus of Figure 1 or Figure 3 according to a seventh embodiment of the present invention; and
Figure 15 is a section view of a generation apparatus according to an eighth embodiment of the present invention.

### Detailed Description of the Drawings

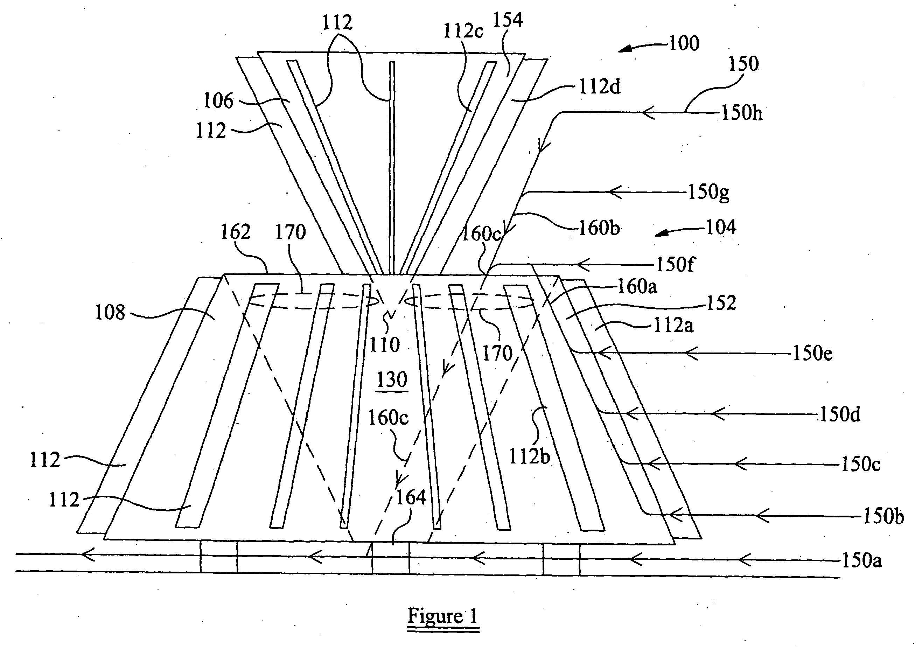

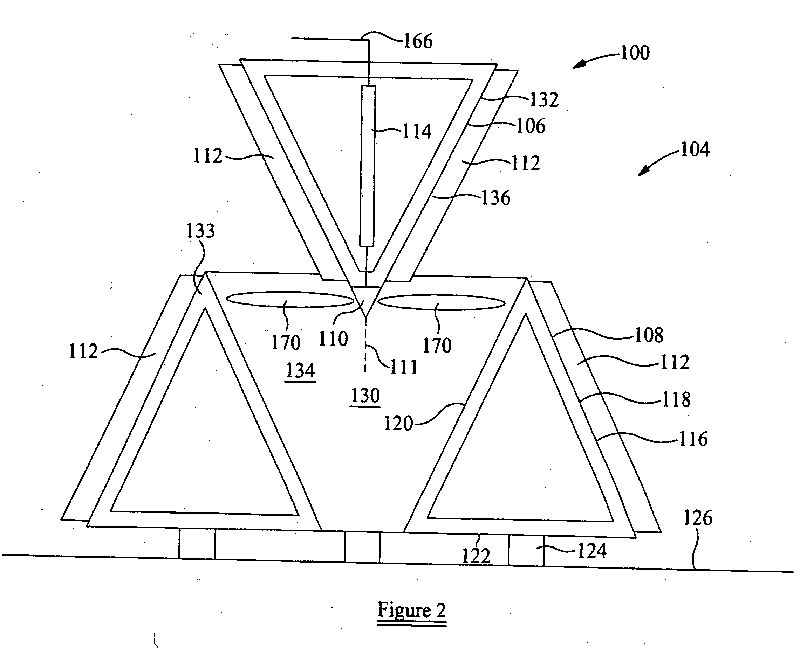

Reference is firstly made to Figures 1 and 2, side and section views of a generation apparatus, generally indicated by reference numeral 100, according to a first embodiment of a present invention.

The apparatus 100 comprises a stainless steel housing 104, the housing 104 further comprising an inner housing 106 and an outer housing 108. The apparatus 100 further comprises a vertical axis turbine 110, a plurality of stainless steel guide vanes 112 and a generator 114 for converting rotation of the turbine 110 into power. The maximum housing diameter is 6m and the height of the apparatus 100 is 4m. The apparatus 100 is capable of producing 0.5MW of electricity.

The outer housing 108 comprises a toroid 116 of approximate triangular cross-section. The toroidal housing 108 has an outer surface 118, an inner surface 120 and a lower surface 122. Attached to the lower surface 122 is a base 124 for raising the housing 104 off the seabed 126. The outer housing inner surface 120 defines a throughbore 130 into which the inner housing 106 extends.

The inner housing 106 is conical and defines an outer surface 132. The inner and outer housings 106, 108 each comprise a frame 132,133 clad with stainless steel panels 134, such that the inner and outer housings 106, 108 comprise multiple planer surfaces. This arrangement provides a cross-section through the cone shaped inner housing 106 that is not circular but, in this example a decahedron, that is the outer surface 136 of the inner housing 106 comprises ten steel panels 134.

The inner housing 106 is supported by the outer housing, by struts (not shown) welded between the housing frames 132,133.

The guide vanes 112 are welded to the outer surfaces 118, 136 of the inner and outer housings 106, 108. As can be seen, as each housing 106, 108 tapers, the gap between adjacent vanes 112 narrows. This arrangement assists in accelerating the flow as it passes through the generation apparatus 100.

The operation of the generation apparatus 100 will now be discussed with reference in particular to Figure 1.

Referring to Figure 1 a current 150 flows towards the apparatus 100 in a direction perpendicular to the vertical axis 111 of the turbine 110. The current 150 is represented by flow lines 150a - 150h. As can be seen from Figure 1, part of the current, represented by the lowest flow line 150a flows underneath the housing 104. A different part of the current, represented by the next four flow lines 150b - 150e, flows onto the outer housing outer surface 118 to form a outer housing flow 160a. The outer housing flow 160 flows up a series of flow paths 152 defined by the outer housing surface 118 and adjacent pairs of guide vanes 112, on the side of the outer housing 108 exposed to the current 150. For clarity the current 150b-150e which flows into the outer housing surface 118 is only shown flowing between two of the guide vanes 112a, 112b.

The current 150 engages the apparatus at two meters per second. However, as the water flows up the outer housing outer surface 118, it accelerates due to the narrowing of the flow paths 152 defined by the vanes 112a, 112b and the outer housing outer surface 118. The flow accelerates because it is being forced through the narrowing flow paths 152 by the continual flow of the current 150b - 150e into the flow paths 152.

Similarly a further portion of the current 150, represented by the sixth to eighth flow lines 150f - 150h, impacts on the inner housing outer surface 136, forming an inner housing flow 160b. The inner housing flow 160b is forced down towards a turbine inlet 162, the plane of the turbine inlet 162 being approximately parallel to the flow lines 150 prior to the flow lines 150 engaging the apparatus 100. In the case of the inner housing 106, the flow 150f- 150h is accelerated by the narrowing of the inner housing flow paths 154 defined adjacent inner housing guide vanes 112 and the inner housing surface 136. Again, by way of example the current 150 is shown flowing down a flow path 154 bounded by two of the guide vanes 112c, 112d, however it will be understood that a given current flow 150 will be gathered by all the flow paths 152,154 exposed to that current 150. In most cases this will be the flow paths 152,154 covering up to 50% of the exposed surface area of the housing 104 at any given moment. As the generation apparatus 100 is effectively radial in nature, the apparatus 100 can generate power from a current flow 150 from any given direction.

As the flow 160a in the outer housing flow path 152 meets the flow 160b in the inner housing flow path 154, the flows 160a, 160b combine to form a combined flow 160c which flows through a turbine inlet 162 and into the turbine 110 to rotate the turbine blades 170.

At the turbine inlet 162, the pressure of the fluid is relatively high. In contrast at a housing outlet 164 the pressure of the fluid is relatively low and the portion of the current 150a flowing under the housing 104, passes the housing outlet 164, creating a venturi effect at the housing outlet 164 sucking the combined flow 160c through the outer housing throughbore 130 and out through the housing outlet 164.

The rotation of the turbine blade 170 is captured by the generator 114 to generate electricity which is then fed through a cable 166 to power control and conditioning circuitry (not shown) before being output for use in various applications. Some of these applications will be discussed in due course.

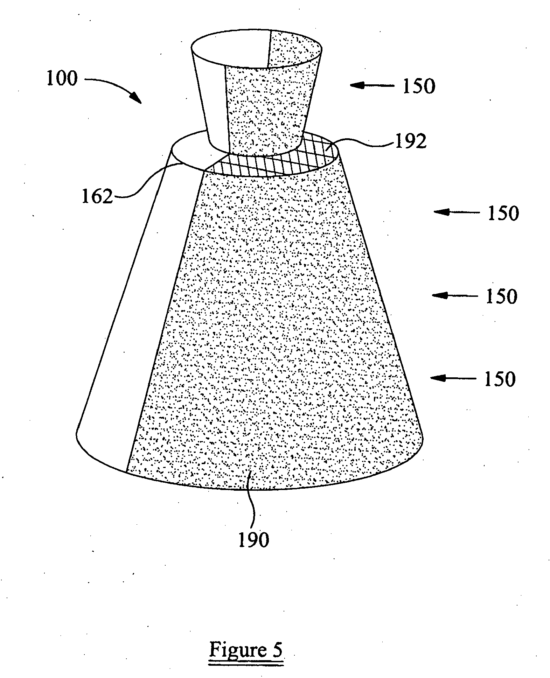

Referring to Figure 5, the incoming flow of water 150 will impact on one side of the apparatus 100, represented by the shaded region 190 on the Figure. As the moving fluid is guided by linear guide vanes towards the turbine blades 170, the moving fluid will only enter approximately half of the area swept by the turbine blades 170. This area is hatched on Figure 5 and indicated by reference numeral 192. It is also believed, however, that the venturi suction effect at the housing outlet 164 may also suck some of the flow which has passed by the sides of the apparatus 100 into the turbine inlet 162 at a location not directly exposed to the direction of the incoming current 150 (this is represented on Figure 5 as a non-hatched part of the turbine inlet 162).

It will also be appreciated that the turbine 110 is effectively concealed and the apparatus 100 has no moving parts which can snag, for example, fishing nets.

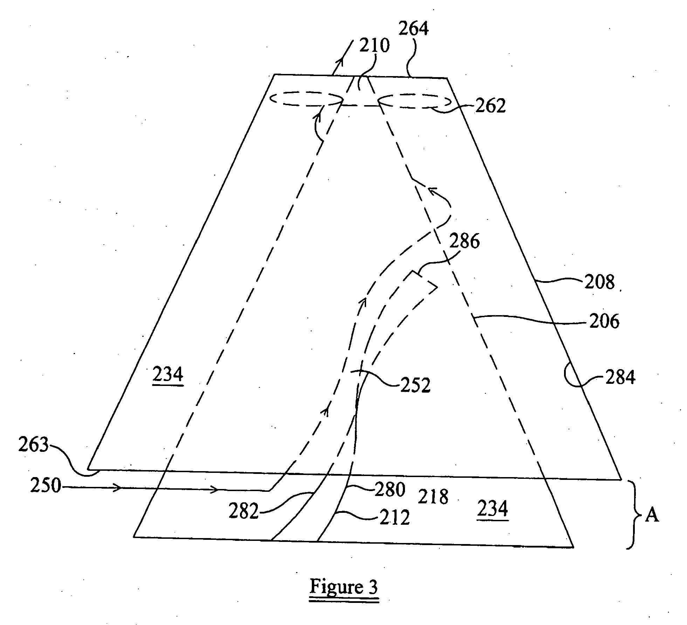

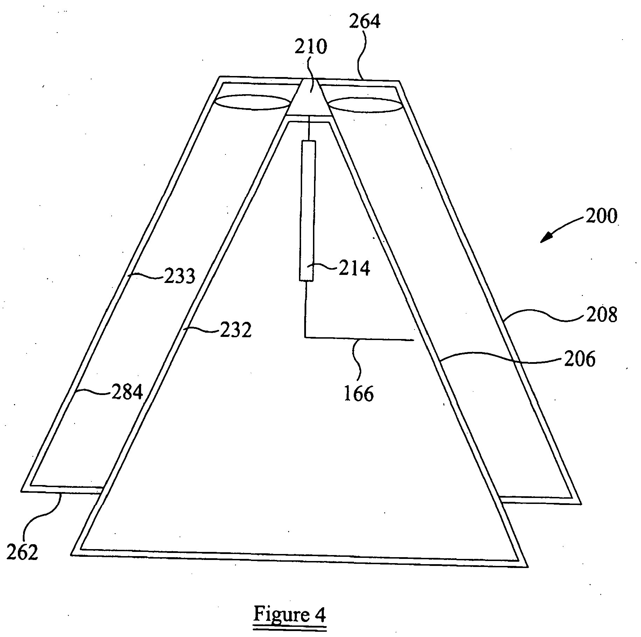

Reference is now made to Figures 3 and 4 side and section views of a generation apparatus 200 according to a second embodiment of the invention. In this embodiment features and components which are common between the first and second embodiments are given the same reference numeral as the first embodiment with "100" added to the numeral.

In this embodiment, the apparatus 200 comprises inner and outer housings 206, 208 in a stacked relationship. The housings 206, 208 are frusto-conical and together define a housing inlet 263 and a housing outlet 264 with a vertical access turbine 210 located therebetween, the turbine having a turbine inlet 262. The vertical axis turbine 210 is attached to a generator 214 which generates power which is in turn fed via cable 266 to power control and conditioning circuitry (not shown) and used in various applications which will be discussed in due course.

The housings 206,208 each comprise a frame 232,233 covered in ripstop nylon 234. The outer housing frame 233 is supported by the inner housing frame 232, the two frames 233, 232 being connected by struts (not shown)

The generation apparatus 210 of Figures 3 and 4 further comprises guide vanes 212 (only one of which is shown on Figure 3 for clarity). The guide vanes 212 comprise ripstop nylon and are helical and extend approximately two thirds of the height of the apparatus 210. Each guide vane 212 has an inner edge 280 which is stitched to the inner housing surface 218 and a outer edge 282 which, in the area of overlap between the guide vane 212 and the outer housing 208, is attached to the outer housing inner surface 284.

The incoming flow 250 meets the inner housing 206 and flows up and around the inner housing surface 218 along enclosed flow paths 252 defined by the inner housing outer surface 218, adjacent pairs of guide vanes 212 and the outer housing inner surface 284.

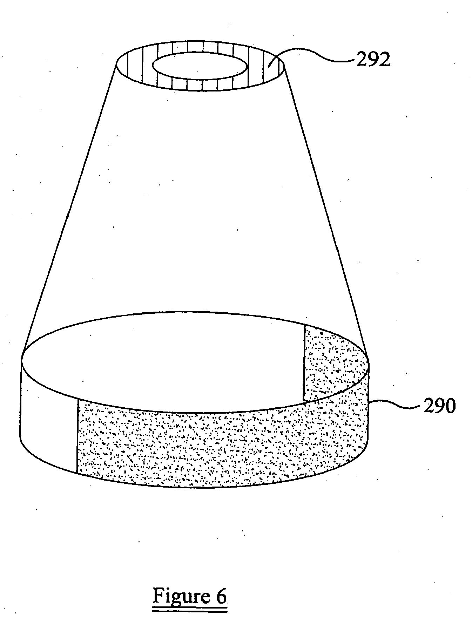

In contrast to the first embodiment 100 in which flow impacting on the full height of the apparatus 100 was utilisable to generate power, only flow impacting on the shaded region 290 on Figure 6 can be used to harness power in the second embodiment of the apparatus 200. However the use of helical guide vanes 212 imparts rotation to the flow 250 and after the rotating fluid has passed the end 286 of the each vane 212, the flow 250 continues to rotate around the inner housing 206 such that moving fluid is delivered to the full area swept by the turbine blades 270 as they rotate, indicated by the hatched region 292 on Figure 6. This means that for the full swept area of the turbine blades 270, the blades 270 are being moved by fluid. This it is believed generates a faster rotation of the turbine 210. This contrasts with a situation in which a portion to the fluid in the swept area of the turbine blades is stationary or stagnant. If there is stationary or stagnant fluid in the turbine blades, the turbine blades have to move the fluid, which counters the rotation generated by the moving fluid at another part of the swept area, reducing the efficiency of the turbine.

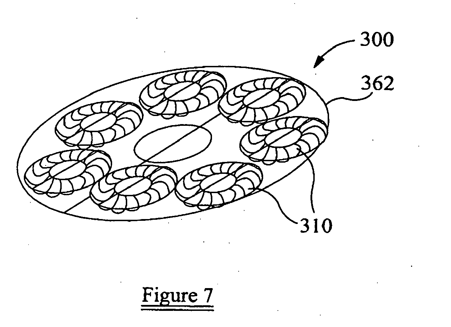

A schematic of part of a generation apparatus 300 according to a third embodiment of the present invention is shown in Figure 7. This schematic shows the turbine inlet 362 of an apparatus similar to the apparatus 100 of the first embodiment. The difference here is rather than a single vertical axis turbine there are seven vertical axis turbines 310. A large number of turbines 310 would be used for a larger diameter machine and has the advantage that where flows are being delivered to only part of the turbine inlet area 362 only some of the turbines will be utilised. In areas of the turbine inlet 362 in which the flow is stationery or stagnant, the turbines would not rotate. In situations where there is a single turbine being driven by moving flow in only a portion of the swept area, the turbine blades have to move through stagnant flow in other portions of the swept area, potentially reducing the efficiency of the apparatus.

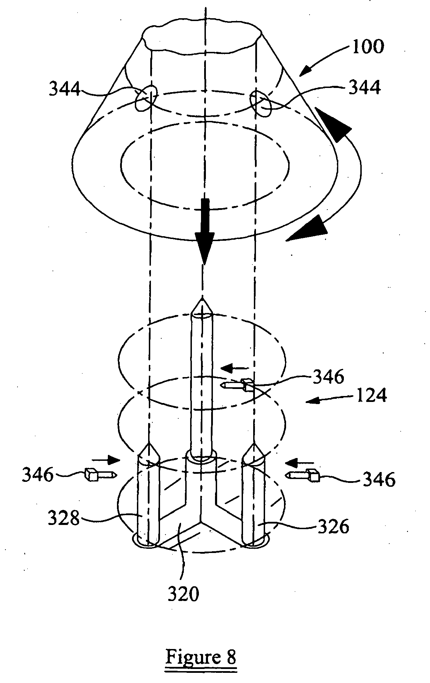

Reference is now made to Figures 8, 9 and 10 which are various views of the base 124 of the generation apparatus 100 of Figure 1. The base 124 comprises a base frame 320 and three support legs 326, 328, 330.

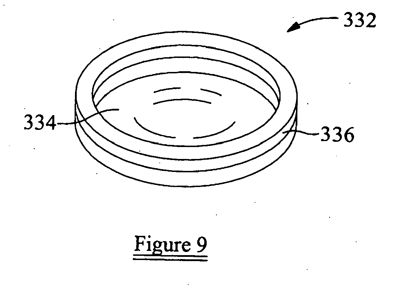

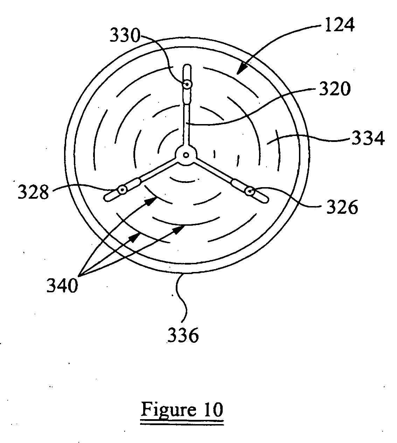

The base 124 also comprises a mould 332 (Figures 9 and 10). The mould 332 includes an inflatable foundation 334, adapted to be inflated with concrete and inflatable walls 336 adapted to be inflated with sea water.

Referring to Figure 10, as the base 124 is lowered to the sea bed, water is allowed to flow through slits 340 in the inflatable foundation 334. Once the base 124 has been located on the sea bed and levelled, concrete is pumped into the foundation 334. This procedure encapsulates the base frame 320 in concrete securing it to the sea bed. If further weight is required, the inflatable walls 336 are inflated with sea water and ballast can be loaded into the base 124. Once the base 124 is fully weighed down, the apparatus 100 is lowered to engage the extended leg 330 which extends to a greater height than the other two support legs 326,328 with one of three housing apertures 344. Once engaged with the extended leg 330, the apparatus 100 is rotated to align the other two housing apertures 344 (Figure 8) with the remaining two support legs 326, 328 and the apparatus 100 is then lowered into engagement with a support shoulder (not shown) on each leg 326, 328, 330. The apparatus 100 is then secured to the base 124 using three pins 346. The mould 332 is biodegradable and will degrade over time.

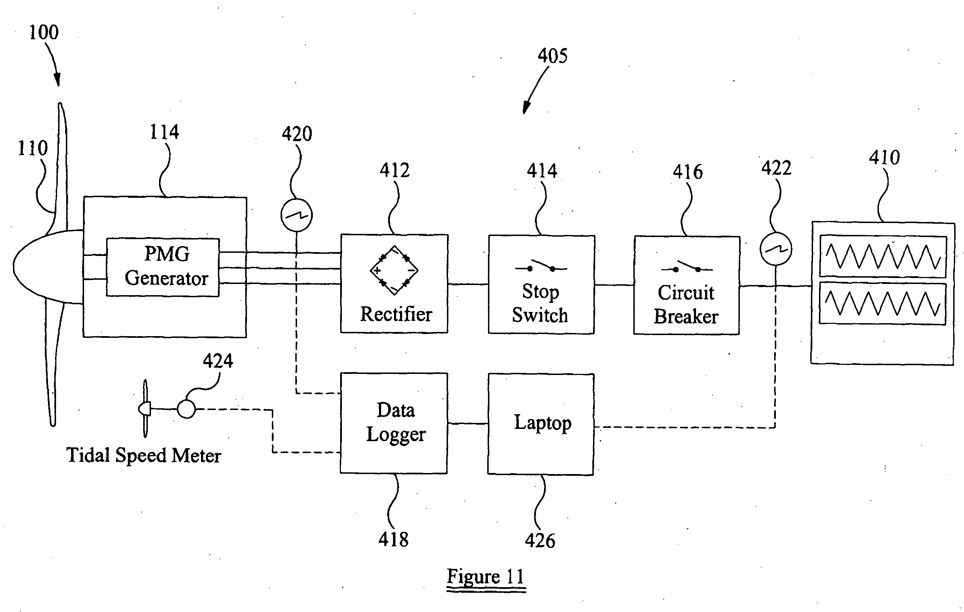

Figures 11 to 14 show schematics of applications of the apparatus 100 of Figure 1, according to fourth, fifth, sixth and seventh embodiments of the present invention.

Figure 11 shows a system 405 in which the apparatus 100 drives a subsea tool 410. The turbine 110 is attached to the generator 114 which is, connected to the tool 410 by a rectifier 412, a stop switch 414 and a circuit breaker 416. The system shown in Figure 11 also comprises a power meter 420 attached to a data logger 418. A tidal speed meter 424 is also connected to the data logger 418. An output meter 422 for measuring the output of the system 405 is attached to a laptop 426. The data logger 418 also feeds the information received from the power meter 420 and the tidal speed meter 424 to the laptop 426. The laptop 426 processes the information and utilise the processed information to calculate the efficiency of the system 405 and make adjustments if required. The power provided by the system 405 powers the tool 410.

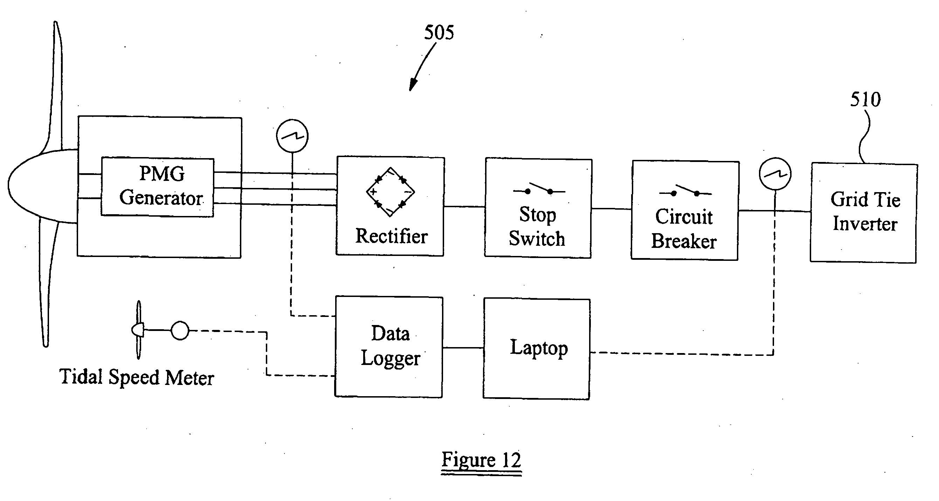

Figure 12 shows a similar system 505 as the system 405 shown in Figure 11, however the power is being supplied to a grid tie inverter 510 for feeding back to a power grid such as the national grid.

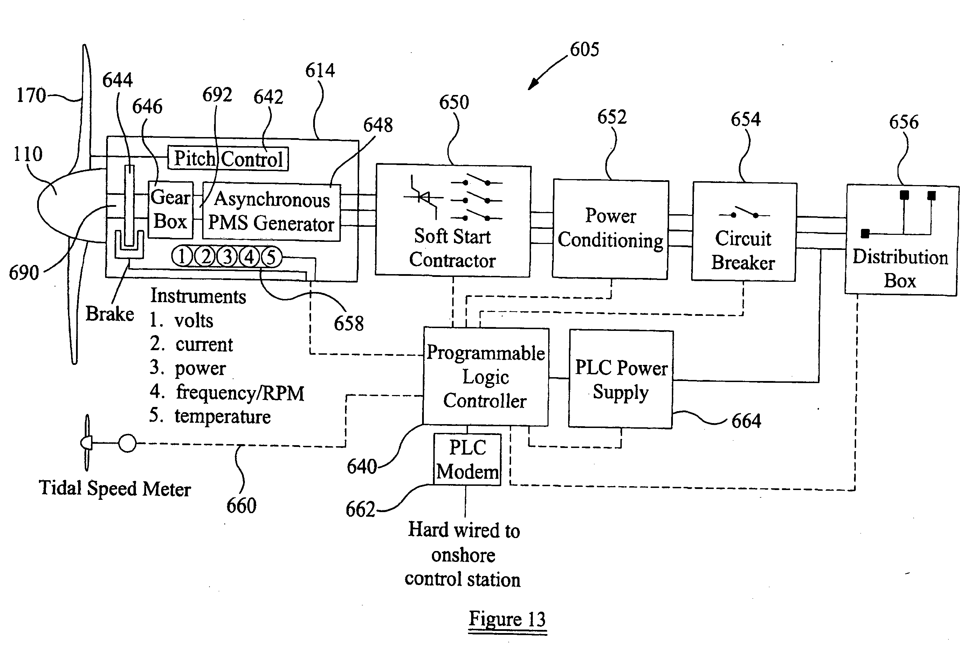

Figure 13 shows a system 605 in which a programmable logic controller 640 is provided for controlling the operation of the system 605. The programmable logic controller primarily controls a generator system 614. The generator system 614 comprises a pitch control 642 for controlling the pitch of the blades, a brake 644 for controlling the speed of the blades, a gearbox 646, an asynchronous generator 648 and an instrument panel 658 for measuring voltage, current, power frequency/rpm and temperature. The gearbox 646 is provided to convert the speed of rotation of the turbine output shaft 690 to the required speed of the generator input shaft 692. The programmable logic controller 640 is also attached to a tidal speed meter 660 and feeds information via a modem 662 to an onshore installation. The programmable logic controller 640 is powered by a power supply 664.

The system also comprises a soft start contactor 650, a power conditioning unit 652, a circuit breaker 654 and a distribution box 656 for distributing the power, for example, to the national grid.

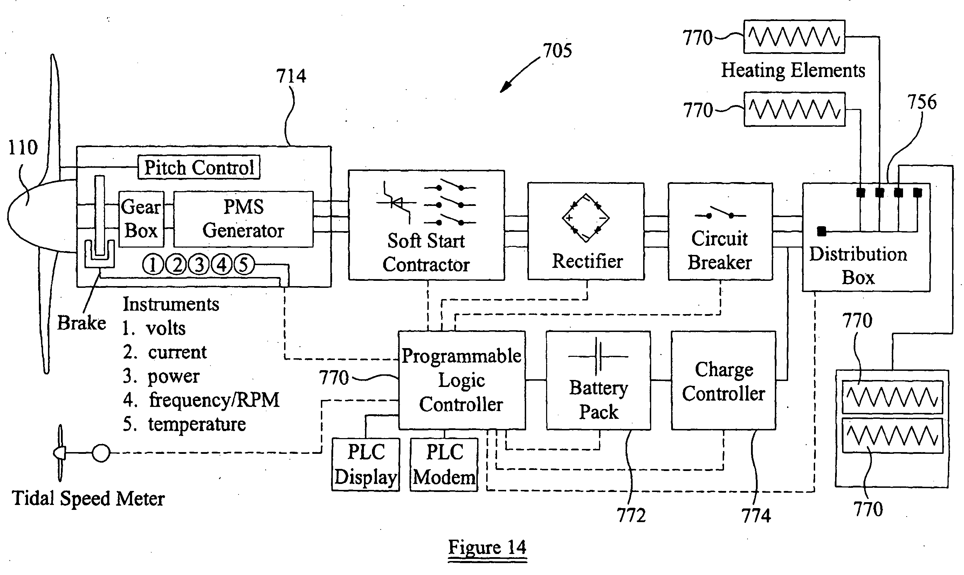

Referring to Figure 14, a schematic of a seventh embodiment system 705 comprising heating elements 770, which are attached to hydrocarbon pipelines (not shown) to maintain the temperature of the hydrocarbon as the hydrocarbon transits through the pipeline system (not shown). The system 705 is largely similar to the system 605 of Figure 13 however, further includes a battery pack 772 for powering the PLC 740 in the event of power not being available from the turbine 110. The system 705 of Figure 14 also includes a charge controller 774 for charging the battery pack as required.

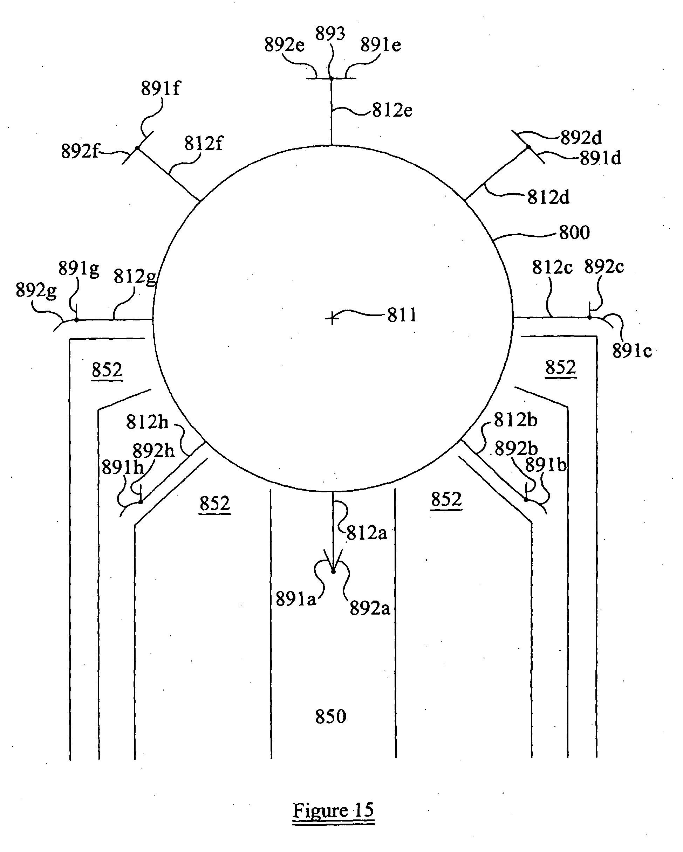

Referring to Figure 15, a section view of a generating apparatus 800 according to an eighth embodiment of the present invention, this embodiment incorporates first and second flexible portions 891 a-h/892a-h at the leading edge 893 of each of the eight apparatus guide vanes 812a-h.

The leading edge 893 of each of the guide vanes 812 is the guide vane edge furthest away from the turbine axis 811.

As the fluid 850 flows towards the apparatus 800, the flexible portions 891, 892 move to maximise fluid flowing into the flow paths 852. For the first guide vane 812a, the plane of which lies parallel to the direction of the fluid flow 850, the flexible portions 891a, 892a fold back towards the guide vane 812a. In the case of the third guide vane 812c and the seventh guide vane 812g, which lie perpendicular to the direction of the fluid flow 850, the flexible portions 891c, 892g on the side of the guide vane 812c, 812g facing the direction of fluid flow 850, bow outwardly to capture more of the fluid flow 850 than the guide vane 812C, 812G, would on its own. This increases the volume of fluid flowing through the apparatus 800.

Various modifications and improvements may be made to the above described embodiments without departing from the scope of the invention, which is defined by the appended Claims.

For example in the second embodiment, a cowl could be provided over the housing outlet 264 to promote development of a low pressure area in the vicinity of a housing outlet 264 to assist in acceleration of the flow of fluid through the turbine 210.

In a further alternative embodiment the guide vanes 212 could comprise a linear portion at, for example, the housing inlet 263 before becoming helical.

In a further alternative embodiment the pitch controller for the turbine blades of figure 13 could be replaced with an automated system in which the blades deflect away from the flow of fluid passing through the turbine inlet as the speed of the flow increases. In this embodiment the blades could be spring loaded to be return towards the direction of flow as the speed of the flow reduces.

## Claims

1. A generation apparatus (100) for generating power from subsea currents, the generation apparatus comprising:
a turbine housing (104);
at least on turbine (110) within the housing (104), the/each turbine (110) having an axis of rotation (111) and an inlet (162);
at least one guide vane (112) adapted to guide an incoming flow of fluid towards the/each turbine inlet (162), the flow of fluid, in use, approaching the apparatus in a direction substantially perpendicular to the at least one turbine axis (111), wherein a surface of the turbine housing and the at least one guide vane (112) define a flow path, wherein at least a portion of the flow path is adapted to change the direction of an incoming flow of fluid from a direction substantially perpendicular to the at least one turbine axis (111) to a direction substantially parallel to the at least one turbine axis (111), and
at least one generator (114) converting rotation of the/each turbine into power.

2. The generation apparatus of any preceding claim, wherein there are a plurality of guide vanes.

3. The generation apparatus of any preceding claim, wherein the/each guide vane is mounted to an at least one housing surface.

4. The generation apparatus of any preceding claim, wherein at least a portion of the/each flow path is a channel, optionally wherein at least a portion of the/each flow path is an enclosed conduit, .

5. The generation apparatus of any preceding claim, wherein at least a portion of the flow path is adapted to change the direction of a horizontal flow to a fluid into a substantially vertical flow of fluid.

6. The generation apparatus of any preceding claim, wherein at least one portion of the/each flow path is adapted to accelerate an incoming flow of fluid, optionally wherein the acceleration of an incoming fluid is achieved by a reduction in cross-sectional area of the flow path.

7. The generation apparatus of any preceding claim, wherein at least a portion of the/each flow path is adapted to impart a rotation on an incoming flow of fluid, wherein the rotating fluid rotates around an axis substantially parallel to at least one turbine axis, optionally wherein the rotating liquid rotates around the housing.

8. The generation apparatus of any preceding claim, wherein the housing comprises inner and outer housings, wherein the inner and outer housings are at least partially spaced apart by the/each guide vane, optionally wherein where there a plurality of guide vanes, the inner housing, the outer housing, and each pair of adjacent guide vanes define at least one flow path.

9. The generation apparatus of claim 8, wherein the inner and outer housings define an apparatus inlet, wherein the inner and outer housings define a turbine inlet, wherein the inner housing and the outer housing define an apparatus outlet; wherein the/each turbine is arranged between the apparatus inlet and the apparatus outlet, wherein the/each flow path is adapted to deliver a flow of fluid to the turbine inlet.

10. The generation apparatus of any preceding claim, wherein the cross sectional area of each flow path decreases over the length of the flow path.

11. The generation apparatus of any of claims 8 to 10, wherein the inner and outer housings comprise conical or frusto-conical regions, wherein the inner and outer housings are in a stacked relationship, wherein the conical or frusto-conical regions are substantially parallel, wherein the conical and frusto-conical regions are convergent to accelerate a fluid flow towards the turbine.

12. The generation apparatus of any of claims 8 to 10, wherein the outer housing is toroidal, the outer housing defining a throughbore, wherein the outer housing throughbore defines a conical internal surface converging towards an apparatus outlet, wherein the cross- section of the toroid is triangular.

13. The generation apparatus of claim 12, wherein the inner housing defines a tapered surface extending into the outer housing throughbore, wherein the inner housing comprises a conical region, wherein the inner housing is arranged as an inverted cone, a portion of the cone extending into the outer housing throughbore.

14. A method of generating power, the method comprising the steps of:
providing a generation apparatus in a flow of fluid, a portion of the flow of fluid being received by the apparatus, at least one apparatus guide vane guiding the flow of fluid towards the/each inlet of an at least one turbine, the/each turbine having an axis of rotation substantially perpendicular to a direction of the flow of fluid, wherein a surface of the turbine housing and the at least one guide vane define a flow path,, wherein at least a portion of the flow path is adapted to change the direction of the incoming flow of fluid from a direction substantially perpendicular to the at least one turbine axis to a direction substantially parallel to the at least one turbine axis.

15. The generation apparatus of any preceding claim, wherein the/each flow path comprises a linear portion and a helical portion, wherein the helical portion is adjacent the turbine inlet; optionally wherein, where the helical portion is adjacent to the turbine inlet, the guide vanes defining the helical portion act as stators.

## Patentansprüche

1. Erzeugungsvorrichtung (100) zur Erzeugung von Strom aus unterseeischen Strömen, wobei die Erzeugungsvorrichtung Folgendes umfasst:
ein Turbinengehäuse (104);
zumindest eine Turbine (110) im Inneren des Gehäuses (104), wobei die/jede Turbine (110) über eine Drehachse (111) und einen Einlass (162) verfügt;
zumindest eine Leitschaufel (112), die angeordnet ist, um einen einströmenden Fluidstrom in Richtung des/jedes Turbineneinlasses (162) zu leiten; wobei der Fluidstrom sich während des Betriebs der Vorrichtung in einer Richtung nähert, welche im Wesentlichen senkrecht zu der mindestens einen Turbinenachse (111) ist; wobei eine Oberfläche des Turbinengehäuses und die zumindest eine Leitschaufel (112) einen Strömungspfad definieren, wobei zumindest ein Teil des Strömungspfades ausgelegt ist, die Richtung eines einströmenden Fluidstroms von einer Richtung, die im Wesentlichen senkrecht zu der mindestens einen Turbinenachse (111) ist, in eine Richtung zu ändern, die im Wesentlichen parallel zu der mindestens einen Turbinenachse (111) ist, und
mindestens einen Generator (114), um die Drehung der/jeder Turbine in Strom umzuwandeln.

2. Erzeugungsvorrichtung nach einem der vorhergehenden Ansprüche, wobei eine Mehrzahl von Leitschaufeln vorhanden ist.

3. Erzeugungsvorrichtung nach einem der vorhergehenden Ansprüche, wobei die/jede Leitschaufel an zumindest einer Gehäusefläche montiert ist.

4. Erzeugungsvorrichtung nach einem der vorhergehenden Ansprüche, wobei zumindest ein Teil des/jeden Strömungspfads aus einem Kanal besteht, wobei wahlweise zumindest ein Teil des/jedes Strömungspfads eine geschlossene Leitung ist.

5. Erzeugungsvorrichtung nach einem der vorhergehenden Ansprüche, wobei zumindest ein Teil des Strömungswegs ausgebildet ist, um die Richtung eines horizontalen Stroms eines Fluids in einen im Wesentlichen vertikalen Fluidstrom zu ändern.

6. Erzeugungsvorrichtung nach einem der vorhergehenden Ansprüche, wobei zumindest ein Teil des/jedes Strömungspfads geeignet ist, einen einströmenden Fluidstrom zu beschleunigen, wobei wahlweise die Beschleunigung eines einströmenden Fluidstroms durch eine Verringerung der Querschnittsfläche des Strömungspfads erreicht wird.

7. Erzeugungsvorrichtung nach einem der vorhergehenden Ansprüche, wobei zumindest ein Teil des/jedes Strömungspfads ausgelegt ist, um einem einströmenden Fluidstrom eine Rotation zu verleihen, wobei das rotierende Fluid um eine Achse im Wesentlichen parallel zu mindestens einer Turbinenachse rotiert, wobei die rotierende Flüssigkeit wahlweise um das Gehäuse herum rotiert.

8. Erzeugungsvorrichtung nach einem der vorhergehenden Ansprüche, wobei das Gehäuse ein inneres und ein äußeres Gehäuse umfasst, wobei das innere und das äußere Gehäuse zumindest teilweise durch die/jede Leitschaufel voneinander beabstandet sind, wobei wahlweise, wenn eine Mehrzahl von Leitschaufeln vorhanden ist, das innere Gehäuse, das äußere Gehäuse und jedes Paar benachbarter Leitschaufeln mindestens einen Strömungspfad definieren.

9. Erzeugungsvorrichtung nach Anspruch 8, wobei das innere und das äußere Gehäuse einen Vorrichtungseinlass definieren, wobei das innere und das äußere Gehäuse einen Turbineneinlass definieren, wobei das innere Gehäuse und das äußere Gehäuse einen Vorrichtungsauslass definieren; wobei die/jede Turbine zwischen dem Vorrichtungseinlass und dem Vorrichtungsauslass angeordnet ist, wobei der/jeder Strömungspfad ausgelegt ist, einen Fluidstrom zum Turbineneinlass zu liefern.

10. Erzeugungsvorrichtung nach einem der vorhergehenden Ansprüche, wobei die Querschnittsfläche jedes Strömungspfads mit der Länge des Strömungspfads abnimmt.

11. Erzeugungsvorrichtung nach einem der Ansprüche 8 bis 10, wobei das innere und das äußere Gehäuse konische oder kegelstumpfförmige Bereiche umfassen, wobei das innere und das äußere Gehäuse sich in einer gestapelten Anordnung befinden, wobei die konischen oder kegelstumpfförmigen Bereiche im Wesentlichen parallel sind, wobei die konischen und kegelstumpfförmigen Bereiche konvergent sind, um einen Fluidstrom in Richtung der Turbine zu beschleunigen.

12. Erzeugungsvorrichtung nach einem der Ansprüche 8 bis 10, wobei das äußere Gehäuse ringförmig ist, wobei das äußere Gehäuse eine Durchgangsbohrung definiert, wobei die Durchgangsbohrung des äußeren Gehäuses eine konische Innenfläche, die in Richtung eines Vorrichtungsauslasses konvergiert, definiert, wobei der Querschnitt des Toroids dreieckig ist.

13. Erzeugungsvorrichtung nach Anspruch 12, wobei das innere Gehäuse eine sich verjüngende Oberfläche definiert, die sich in die Durchgangsbohrung des äußeren Gehäuses erstreckt, wobei das innere Gehäuse einen konischen Bereich aufweist, wobei das innere Gehäuse als ein invertierter Kegel angeordnet ist, wobei ein Teil des Kegels sich in die Durchgangsbohrung des äußeren Gehäuses erstreckt.

14. Verfahren zur Stromerzeugung, wobei das Verfahren die folgenden Schritte umfasst:
Bereitstellen einer Erzeugungsvorrichtung in einem Fluidstrom, wobei ein Teil des Fluidstroms durch die Vorrichtung aufgenommen wird, wobei mindestens eine Vorrichtungsleitschaufel den Fluidstrom in Richtung des/jedes Einlasses mindestens einer Turbine leitet, wobei die/jede Turbine eine Drehachse aufweist, die im Wesentlichen senkrecht zu einer Richtung des Fluidstroms ist, wobei eine Oberfläche des Turbinengehäuses und die mindestens eine Leitschaufel einen Strömungspfad definieren, wobei zumindest ein Teil des Strömungspfads ausgelegt ist, die Richtung des einströmenden Fluidstroms von einer Richtung, die im Wesentlichen senkrecht zu der mindestens einen Turbinenachse ist, in eine Richtung im Wesentlichen parallel zu der mindestens einen Turbinenachse zu ändern.

15. Erzeugungsvorrichtung nach einem der vorhergehenden Ansprüche, wobei der/jeder Strömungspfad einen linearen und einen spiralförmigen Abschnitt umfasst, wobei der spiralförmige Abschnitt sich benachbart zum Turbineneinlass befindet; wobei wahlweise dort, wo der spiralförmige Teil sich benachbart zum Turbineneinlass befindet, die Leitschaufeln, die den schraubenförmigen Teil definieren, als Statoren agieren.

## Revendications

1. Appareil de production (100) permettant de produire de l'énergie à partir de courants sous-marins, l'appareil de production comprenant :
un carter de turbine (104) ;
au moins une turbine (110) au sein dudit carter (104), ladite/chaque turbine (110) présentant un axe de rotation (111) et une entrée (162) ;
au moins une aube de guidage (112) conçue pour guider un écoulement entrant de fluide en direction de ladite/chaque entrée de turbine (162), l'écoulement de fluide, en cours d'utilisation, se rapprochant de l'appareil dans une direction essentiellement perpendiculaire audit au moins un axe de turbine (111), dans lequel une surface du carter de turbine et la au moins une aube de guidage (112) définissent un circuit d'écoulement, dans lequel au moins une partie du circuit d'écoulement est conçue pour modifier la direction d'un écoulement entrant de fluide à partir d'une direction essentiellement perpendiculaire audit au moins un axe de turbine (111) vers une direction essentiellement parallèle audit au moins un axe de turbine (111) ; et
au moins une génératrice (114) permettant de convertir une rotation de ladite/chaque turbine en énergie.

2. Appareil de production selon l'une quelconque des revendications précédentes, dans lequel il existe une pluralité d'aubes de guidage.

3. Appareil de production selon l'une quelconque des revendications précédentes, dans lequel ladite/chaque aube de guidage est montée sur au moins une surface de carter.

4. Appareil de production selon l'une quelconque des revendications précédentes, dans lequel au moins une partie du/de chaque circuit d'écoulement est un canal, éventuellement dans lequel au moins une partie du/de chaque circuit d'écoulement est un conduit fermé.

5. Appareil de production selon l'une quelconque des revendications précédentes, dans lequel au moins une partie du circuit d'écoulement est conçue pour modifier la direction d'un écoulement horizontal d'un fluide en un écoulement de fluide essentiellement vertical.

6. Appareil de production selon l'une quelconque des revendications précédentes, dans lequel au moins une partie du/de chaque circuit d'écoulement est conçue pour accélérer un écoulement entrant de fluide, éventuellement dans lequel l'accélération d'un fluide entrant est obtenue grâce à une réduction de la surface transversale du circuit d'écoulement.

7. Appareil de production selon l'une quelconque des revendications précédentes, dans lequel au moins une partie du/de chaque circuit d'écoulement est conçue pour imprimer une rotation à un écoulement entrant de fluide, dans lequel le fluide en rotation tourne autour d'un axe essentiellement parallèle à au moins un axe de turbine, éventuellement dans lequel le liquide en rotation tourne autour du carter.

8. Appareil de production selon l'une quelconque des revendications précédentes, dans lequel le carter comprend des carters intérieur et extérieur, dans lequel les carters intérieur et extérieur sont au moins partiellement espacés grâce à la/chaque aube de guidage, éventuellement dans lequel, lorsqu'il y a une pluralité d'aubes de guidage, le carter intérieur, le carter extérieur, et chaque paire d'aubes de guidage adjacentes définissent au moins un circuit d'écoulement.

9. Appareil de production selon la revendication 8, dans lequel les carters intérieur et extérieur définissent une entrée d'appareil, dans lequel les carters intérieur et extérieur définissent une entrée de turbine, dans lequel le carter intérieur et le carter extérieur définissent une sortie d'appareil ; dans lequel la/chaque turbine est agencée entre l'entrée d'appareil et la sortie d'appareil, dans lequel le/chaque circuit d'écoulement est conçu pour fournir un écoulement de fluide à l'entrée de turbine.

10. Appareil de production selon l'une quelconque des revendications précédentes, dans lequel la surface transversale de chaque circuit d'écoulement diminue sur la longueur du circuit d'écoulement.

11. Appareil de production selon l'une quelconque des revendications 8 à 10, dans lequel les carters intérieur et extérieur comprennent des régions coniques ou tronconiques, dans lequel les carters intérieur et extérieur sont dans une relation d'empilement, dans lequel les régions coniques ou tronconiques sont essentiellement parallèles, dans lequel les régions coniques et tronconiques sont convergentes afin d'accélérer un écoulement de fluide en direction de la turbine.

12. Appareil de production selon l'une quelconque des revendications 8 à 10, dans lequel le carter extérieur est torique, le carter extérieur définissant un alésage traversant, dans lequel l'alésage traversant de carter extérieur définit une surface interne conique convergeant en direction d'une sortie d'appareil, dans lequel la section transversale du tore est triangulaire.

13. Appareil de production selon la revendication 12, dans lequel le carter intérieur définit une surface conique s'étendant dans l'alésage traversant de carter extérieur, dans lequel le carter intérieur comprend une région conique, dans lequel le carter intérieur est agencé en tant que cône inversé, une partie du cône s'étendant dans l'alésage traversant de carter extérieur.

14. Procédé de production d'énergie, le procédé comprenant les étapes consistant à :
fournir un appareil de production dans un écoulement de fluide, une partie de l'écoulement de fluide étant reçue par l'appareil, au moins une aube de guidage d'appareil guidant l'écoulement de fluide en direction de ladite/chaque entrée d'au moins une turbine, la/chaque turbine présentant un axe de rotation essentiellement perpendiculaire à une direction de l'écoulement de fluide, dans lequel une surface du carter de turbine et la au moins une aube de guidage définissent un circuit d'écoulement, dans lequel au moins une partie du circuit d'écoulement est conçue pour modifier la direction de l'écoulement entrant de fluide d'une direction essentiellement perpendiculaire audit au moins un axe de turbine vers une direction essentiellement parallèle audit au moins un axe de turbine.

15. Appareil de production selon l'une quelconque des revendications précédentes, dans lequel ledit/chaque circuit d'écoulement comprend une partie linéaire et une partie hélicoïdale, dans lequel la partie hélicoïdale est adjacente à l'entrée de turbine, éventuellement dans lequel, à l'endroit où la partie hélicoïdale est adjacente à l'entrée de turbine, les zones de guidage définissant la partie hélicoïdale jouent le rôle de stators.
